(19) Europäisches Patentamt
European Patent Office
Office européen des brevets

(11) **EP 4 712 604 A1**

(12) **EUROPEAN PATENT APPLICATION**
published in accordance with Art. 153(4) EPC

(43) Date of publication:
**18.03.2026 Bulletin 2026/12**

(21) Application number: **23936840.0**

(22) Date of filing: **12.05.2023**

(51) International Patent Classification (IPC):
*H04W 64/00* (2009.01)   *H04W 4/02* (2018.01)

(52) Cooperative Patent Classification (CPC):
**H04W 4/02; H04W 64/00**

(86) International application number:
**PCT/CN2023/093886**

(87) International publication number:
**WO 2024/234144 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**
(72) Inventors:
• **YU, Xinlei**
**Dongguan, Guangdong 523860 (CN)**
• **LIU, Yang**
**Dongguan, Guangdong 523860 (CN)**

(74) Representative: **Mewburn Ellis LLP**
**Aurora Building**
**Counterslip**
**Bristol BS1 6BX (GB)**

(54) **INFORMATION PROVIDING METHOD AND APPARATUS, INFORMATION ACQUISITION METHOD AND APPARATUS, DEVICE, AND STORAGE MEDIUM**

(57) An information providing method and apparatus, an information acquisition method and apparatus, a device, and a storage medium, relating to the technical field of communications. The information providing method may comprise: providing first information to a first device, the first information being used for determining the position of a first terminal device, and the position of the first terminal device being used for determining the position of a sensing target (710). When a terminal device exists in a sensing receiver and a sensing transmitter, a first terminal device provides the position of the first terminal device to a first device, such that the first device can determine the positions of the sensing receiver and the sensing transmitter, and the first device can determine the position of a sensing target according to the positions of the sensing receiver and the sensing transmitter.

| First terminal device | | First device |
|---|---|---|

710, provide first information to a first device, where the first information is used for determining a location of a first terminal device, the location of the first terminal device is used for determining a location of a sensing target

**FIG. 7**

## Description

## TECHNICAL FIELD

Embodiments of the present disclosure relate to the field of communication technology, and in particular, to an information providing method, an information acquisition method, apparatuses, a device, and a storage medium.

## BACKGROUND

Radio electromagnetic wave signals used by cellular networks can not only be used for wireless data transmission and communication, but also have environmental sensing capabilities.

In the related art, a sensing transmit device transmits a sensing signal to a sensing target, and a sensing receive device receives an echo signal of the sensing target in response to the sensing signal. A sensing control network element determines a location of the sensing target based on locations of the sensing receive device and the sensing transmit device as well as measurement quantities of the echo signal of the sensing receive device in response to the sensing signal, and then determines sensing information of the sensing target based on the location of the sensing target.

However, in a case where a terminal device exists in the sensing receive device and the sensing transmit device, the sensing control network element cannot acquire a location of the terminal device, so that the sensing control network element cannot acquire the sensing information of the sensing target.

## SUMMARY

Embodiments of the present disclosure provide an information providing method, an information acquisition method, apparatuses, a device, and a storage medium. The technical solutions are as follows.

According to one aspect of the embodiments of the present disclosure, an information providing method is provided. The method is performed by a first terminal device. The first terminal device is configured to: transmit a sensing signal to a sensing target, and/or receive an echo signal from the sensing target. The method includes:
providing first information to a first device, where the first information is used for determining a location of the first terminal device, and the location of the first terminal device is used for determining a location of the sensing target.

According to one aspect of the embodiments of the present disclosure, an information acquisition method is provided. The method is performed by a first device. The method includes:
receiving first information provided by a first terminal device, where the first terminal device is configured to: transmit a sensing signal to a sensing target, and/or receive an echo signal from the sensing target; the first information is used for determining a location of the first terminal device, and the location of the first terminal device is used for determining a location of the sensing target.

According to one aspect of the embodiments of the present disclosure, an information providing apparatus is provided. The apparatus includes:
a transmitting module configured to provide first information to a first device, where the first information is used for determining a location of a first terminal device, and the location of the first terminal device is used for determining a location of a sensing target.

According to one aspect of the embodiments of the present disclosure, an information acquisition apparatus is provided. The apparatus includes:
a receiving module configured to receive first information provided by a first terminal device, where the first terminal device is configured to: transmit a sensing signal to a sensing target, and/or receive an echo signal from the sensing target; the first information is used for determining a location of the first terminal device, and the location of the first terminal device is used for determining a location of the sensing target.

According to one aspect of the embodiments of the present disclosure, a communication device is provided, including a processor and a memory. The memory has stored a computer program, and the processor executes the computer program to implement the above-mentioned information providing method or the above-mentioned information acquisition method. The communication device may be a first terminal device, or may be a first device.

According to one aspect of the embodiments of the present disclosure, a computer-readable storage medium is provided. The storage medium has stored a computer program. The computer program is used for being executed by a processor, to implement the above-mentioned information providing method or the above-mentioned information acquisition method.

According to one aspect of the embodiments of the present disclosure, a chip is provided, and the chip includes a programmable logic circuit and/or program instructions. When the chip is running, the chip is configured to implement the above-mentioned information providing method or the above-mentioned information acquisition method.

According to one aspect of the embodiments of the present disclosure, a computer program product is provided, and the computer program product includes computer instructions. The computer instructions are stored in a computer-readable storage medium. A processor reads the computer instructions from the computer-readable storage medium and executes the computer instructions to implement the above-mentioned information providing method or the above-mentioned information acquisition method.

The technical solutions provided in the embodiments of the present disclosure may have the following beneficial effects.

In a case where a terminal device exists in the sensing receive device and the sensing transmit device, the terminal device provides the location of the terminal device to the first device, so that the first device may determine locations of the sensing receive device and the sensing transmit device. Then, the first device may determine the location of the sensing target based on the locations of the sensing receive device and the sensing transmitting device. Furthermore, the sensing information of the sensing target may be acquired based on the location of the sensing target, thereby improving reliability and success rate of acquiring the sensing information of the sensing target.

## BRIEF DESCRIPTION OF THE DRAWINGS

FIG. 1 is a schematic diagram of a network architecture provided in an embodiment of the present disclosure;

FIG. 2 is a diagram of a 5th generation (5G) network system architecture provided in an embodiment of the present disclosure;

FIG. 3 is a schematic diagram of a wireless sensing mode provided in an embodiment of the present disclosure;

FIG. 4 is a flowchart of user equipment-UE (UE-UE) sensing provided in an embodiment of the present disclosure;

FIG. 5 is a flowchart of UE-UE sensing in an out-of-coverage (OOC) scenario provided in an embodiment of the present disclosure;

FIG. 6 is a schematic diagram of a method for determining a location of a sensing target provided in an embodiment of the present disclosure;

FIG. 7 is a flowchart of an information providing method provided in an embodiment of the present disclosure;

FIG. 8 is a flowchart of an information providing method provided in another embodiment of the present disclosure;

FIG. 9 is a block diagram of an information providing apparatus provided in an embodiment of the present disclosure;

FIG. 10 is a block diagram of an information providing apparatus provided in another embodiment of the present disclosure;

FIG. 11 is a block diagram of an information acquisition apparatus provided in an embodiment of the present disclosure;

FIG. 12 is a block diagram of an information acquisition apparatus provided in another embodiment of the present disclosure; and

FIG. 13 is a schematic structural diagram of a communication device provided in an embodiment of the present disclosure.

## DETAILED DESCRIPTION

In order to make objectives, technical solutions and advantages of the present disclosure clearer, implementations of the present disclosure will be further described in detail below with reference to the accompanying drawings.

The network architecture and service scenarios described in the embodiments of the present disclosure are intended to more clearly illustrate the technical solutions of the embodiments of the present disclosure, and do not constitute a limitation on the technical solutions provided in the embodiments of the present disclosure. A person skilled in the art will appreciate that, with evolution of the network architecture and emergence of new service scenarios, the technical solutions provided in the embodiments of the present disclosure are equally applicable to similar technical problems.

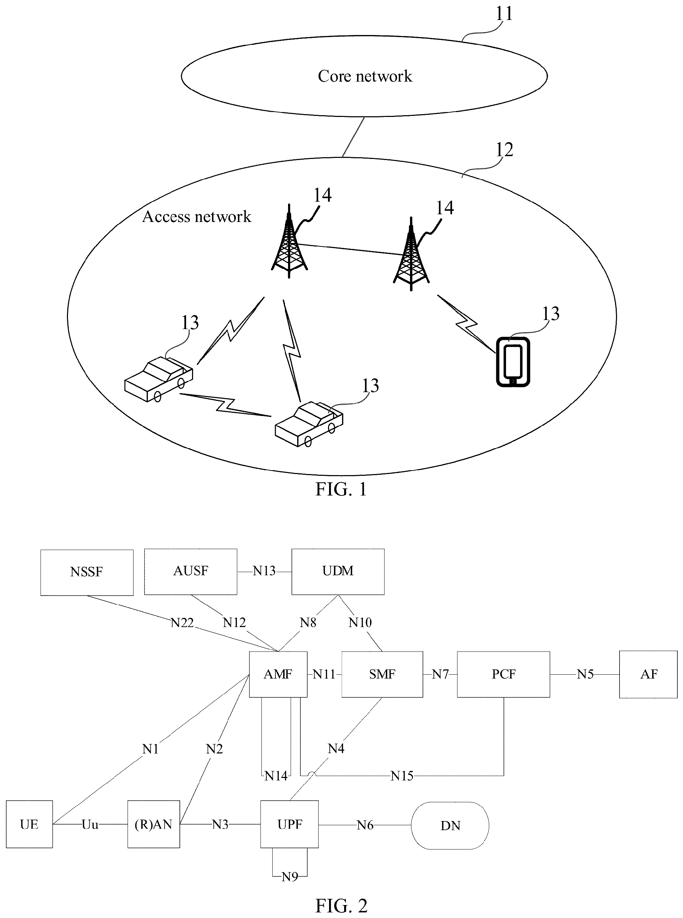

Referring to FIG. 1, FIG. 1 shows a schematic diagram of a network architecture provided in an embodiment of the present disclosure. The network architecture may include: a core network 11, an access network 12, and terminal devices 13.

The core network 11 includes several core network devices. A main function of the core network device is to provide user connection, user management and service carrying, and to provide an interface to an external network as a bearer network. For example, a core network of a 5G new radio (NR) system may include devices such as an access and mobility management function (AMF) entity, a user plane function (UPF) entity, and a session management function (SMF) entity.

The access network 12 includes several access network devices 14. An access network in the 5G NR system may be referred to as a new generation-radio access network (NG-RAN). The access network devices 14 are devices deployed in the access network 12 to provide wireless communication functions for the terminal devices 13. The access network devices 14 may include various forms of macro base stations, micro base stations, relay stations, access points, etc. In systems using different wireless access technologies, a name of a device with an access network device function may vary, for example, it is referred to as a gNodeB or gNB in the 5G NR system. As communication technology evolves, a name "access network device" may vary. For convenience of description, in the embodiments of the present disclosure, the above-mentioned devices that provide wireless communication functions for the terminal devices 13 are collectively referred to as access network devices.

There are usually multiple terminal devices 13, and one or more terminal devices 13 may be distributed in a cell managed by each access network device 14. The terminal devices 13 may include various devices with wireless communication functions, such as handheld devices, in-vehicle devices, wearable devices, computing devices or other processing devices connected to a wireless modem, as well as various forms of user equipments (UEs), mobile stations (MSs), etc. For convenience of description, the devices mentioned above are collectively referred to as terminal devices. That is, the terminal devices and the UEs mentioned in the embodiments of the present disclosure can be understood as having the same meaning. The access network device 14 and the core network device communicate with each other via an air technology, such as a NG interface in the 5G NR system. The access network device 14 and the terminal device 13 communicate with each other via an air technology, such as a Uu interface.

The terminal device 13 and the terminal device 13 (e.g., an in-vehicle device and other devices (such as another in-vehicle device, mobile phone, road side unit (RSU), etc.)) may communicate with each other via a direct communication interface (such as a proSe communication 5 (PC5) interface). Accordingly, a communication link established based on the direct communication interface may be referred to as a direct link or sidelink (SL). An SL transmission refers to a direct transmission of communication data between terminal devices via a sidelink. Unlike a traditional cellular system in which communication data is received or transmitted via an access network device, the SL transmission has characteristics of short latency and low overhead, making it suitable for communication between two terminal devices in close proximity (e.g., an in-vehicle device and another peripheral device in close proximity). It should be noted that in FIG. 1, only a vehicle-to-vehicle communication in a vehicle to everything (V2X) scenario is used as an example. An SL technology may be applied to scenarios in which various terminal devices communicate directly with each other. In other words, the terminal device in the present disclosure refers to any device that communicates using the SL technology.

The "5G NR system" in the embodiments of the present disclosure may also be referred to as a 5G system or an NR system, and those skilled in the art can understand its meaning. The technical solutions described in the embodiments of the present disclosure may be applied to the 5G NR system, or may be applied to subsequent evolution systems of the 5G NR system.

Before introducing the technical solutions of the present disclosure, some background technical knowledge involved in the present disclosure is first introduced and explained. The following related technologies may be arbitrarily combined with the technical solutions of the embodiments of the present disclosure as optional solutions, and they all fall within the protection scope of the embodiments of the present disclosure. The embodiments of the present disclosure include at least part of the following contents.

As shown in FIG. 2, in a 5G network system architecture, a UE establishes an access stratum connection with an access network (AN) via a Uu interface, enabling exchange of access stratum messages and wireless data transmission; and the UE establishes a non-access stratum (NAS) connection with an AMF via an N1 interface, to exchange NAS messages. The AMF is a mobility management function in the core network, and an SMF is a session management function in the core network. In addition to mobility management for the UE, the AMF is further responsible for forwarding session management related messages between the UE and the SMF. A policy control function (PCF) is a policy management function in the core network, responsible for formulating policies related to mobility management, session management, charging, etc. for the UE. A UPF is a user plane function in the core network, and the UPF performs data transmission with an external data network via an N6 interface, and performs data transmission with the AN via an N3 interface.

Table 1: sensing information at different levels

| | Sensing information at different levels | Content of sensing information |
|---|---|---|
| 1 | Received signal or original channel information | Complex results of received signal or channel response, amplitude/phase, I-component/Q-component and their related calculation results |
| 2 | Basic measurement quantity | Time delay, Doppler shift, angle, signal strength, and their multidimensional combination representation |
| 3 | Basic attributes or status of a sensing target | Distance, speed, orientation, acceleration, etc. |

(continued)

|  | Sensing information at different levels | Content of sensing information |
|---|---|---|
| 4 | Advanced attributes or status of a sensing target | Target presence, spatial location, trajectory, movement, expression, vital signs, quantity, imaging results, weather, air quality, shape, material, composition, etc. |

Current cellular networks, including 5G networks, are only used for communication. However, in fact, radio electromagnetic wave signals used by the cellular networks may not only be used for wireless data transmission and communication, but also have environmental sensing capabilities, such as user motion or gesture recognition, respiration monitoring, terminal movement speed measurement, environmental imaging, weather monitoring, etc. Therefore, in the future, the cellular networks may be considered not only for communication and data transmission, but also for sensing information acquisition. Table 1 lists some sensing information at different levels.

5G-A sensing and communication scenarios may be divided into per-area sensing and communication scenarios and per-object sensing and communication scenarios according to whether sensing requirements focus on designated sensing areas or designated sensing targets. Based on whether a sensing target is capable of transmitting or receiving signals, the sensing and communication scenarios may be divided into device-based sensing and communication scenarios and device-free sensing and communication scenarios. For example, in flight path management and base station and terminal beam management, sensing targets (drones and terminals) are user equipments capable of transmitting or receiving signals, belonging to the device-based sensing and communication scenarios. In weather monitoring and respiratory monitoring, the sensing targets (rain and people) are targets that are not capable of transmitting or receiving signals, belonging to the device-free sensing and communication scenarios.

The related technologies propose supporting sensing capabilities in a beyond fifth generation (B5G) network, and supporting sensing functions in 3rd generation partnership project (3GPP) network by adding a sensing control network element (e.g., a sensing function (SF)) and corresponding processes. In a case where an application transmits a sensing request for a sensing target to a core network of the 3GPP network, the core network selects a correct access network device or an auxiliary UE (collectively referred to as a sensing node) via the sensing control network element or the AMF, and triggers a capability of performing sensing-related wireless measurements, activates a measurement of sensing information and generates sensing results. The sensing request may include at least one of: a mobile terminated-sensing request (MT-SR), a mobile originated-SR (MO-SR), or a network induced-SR (NI-SR).

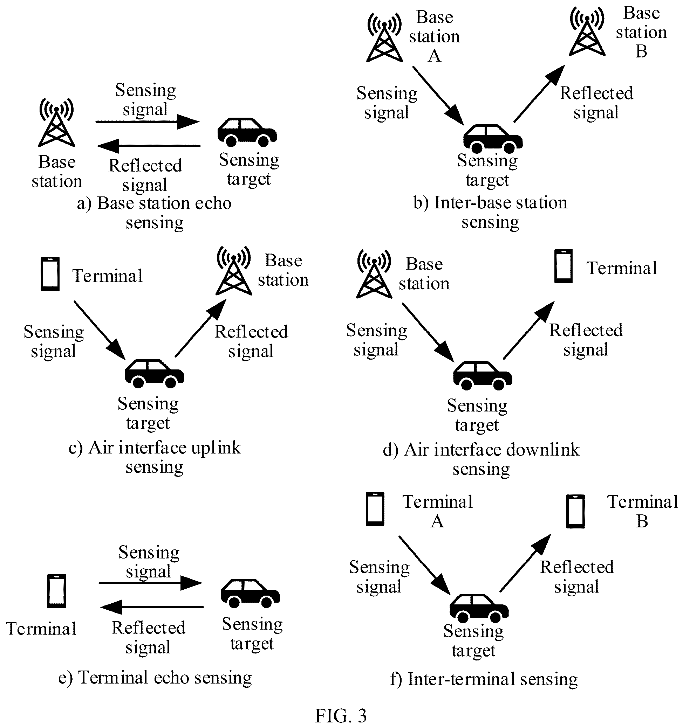

As shown in FIG. 3, main wireless sensing modes of integrated sensing and communication are as follows:

1) base station echo sensing (single gNB self-transmitting and self-receiving sensing): a base station transmits a sensing signal and receives an echo signal.
2) inter-base station sensing (gNB-gNB sensing): base station B receives a sensing signal transmitted by base station A;
3) air interface uplink sensing (UE-gNB uplink sensing): a base station receives a sensing signal transmitted by a terminal;
4) air interface downlink sensing (UE-gNB downlink sensing): a terminal receives a sensing signal transmitted by a base station;
5) terminal echo sensing (single UE self-transmitting and self-receiving sensing): a terminal transmits a sensing signal and receives an echo signal;
6) inter-terminal sensing (UE-UE sensing): terminal B receives a sensing signal transmitted by terminal A.

In an early stage of B5G integrated sensing and communication, consideration is given to reusing existing air interface signals as much as possible to perform sensing behaviors without introducing too much air interface enhancement; in addition, by considering complexity of full-duplex implementation, sensing between terminals and/or base stations is a priority direction.

Several flowcharts are provided below by taking the UE-UE sensing as an example. The UE-gNB sensing process may be similar to this.

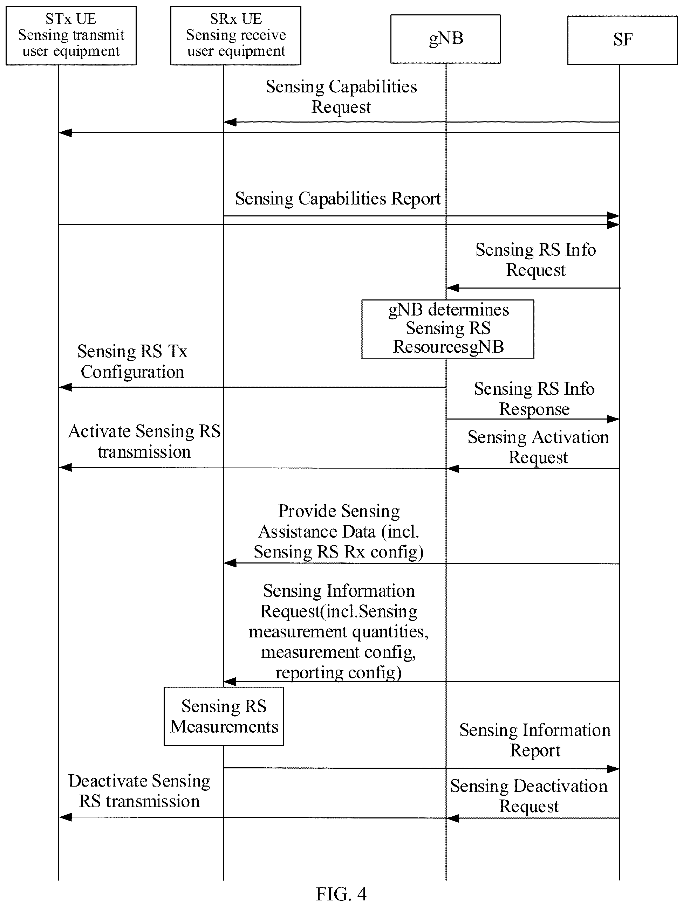

FIG. 4 shows a flowchart of a UE-UE sensing controlled by an SF. An SF, a sensing receive terminal device, and a sensing transmit terminal device perform sensing according to processes shown in FIG. 4.

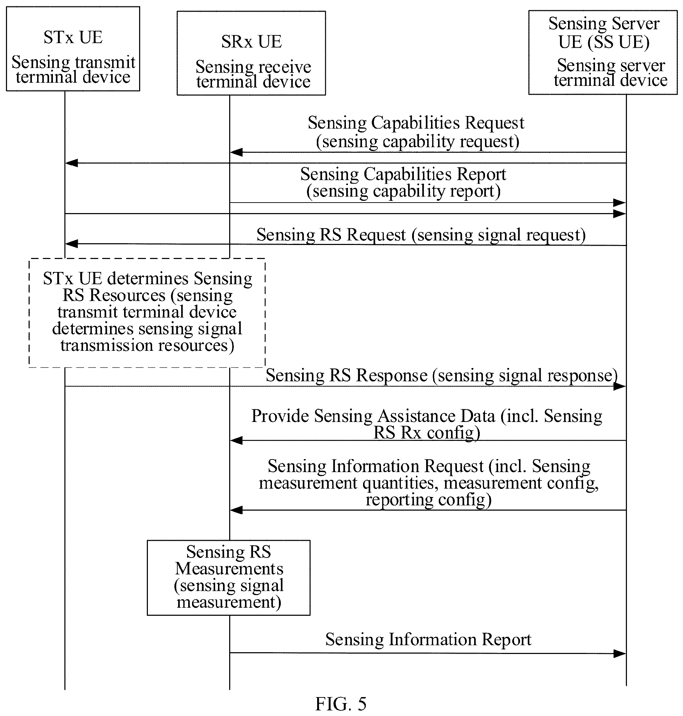

FIG. 5 shows a flowchart of a terminal-independent UE-UE sensing, mainly for an OOC scenario. For the OOC scenario, due to the lack of network coverage, an SF cannot participate in terminal positioning process. Therefore, a sensing server terminal device (e.g., a sensing server UE (SS UE)) needs to be selected, and this terminal role will partially undertake some tasks of the SF in the OOC scenario.

Terminal sensing requires definition of different terminal roles as follows:

sensing transmit terminal: a sensing transmit terminal is responsible for transmitting sensing signals in the terminal sensing;

sensing receive terminal: a sensing receive terminal is responsible for receiving measurement sensing signals and acquiring sensing measurement quantities in the terminal sensing;

sensing server terminal/sensing management terminal: a logical node that undertakes some SF functions in the OOC scenario of the terminal sensing, such as sensing measurement quantity processing. It may be one of the sensing transmit terminal and the sensing receive terminal, or it may be independent of the sensing transmit terminal and the sensing receive terminal.

As mentioned above, use cases of different sensing scenarios may have some sensing information at different levels, and the premise for acquiring most of the sensing information is to first acquire location information of the sensing target.

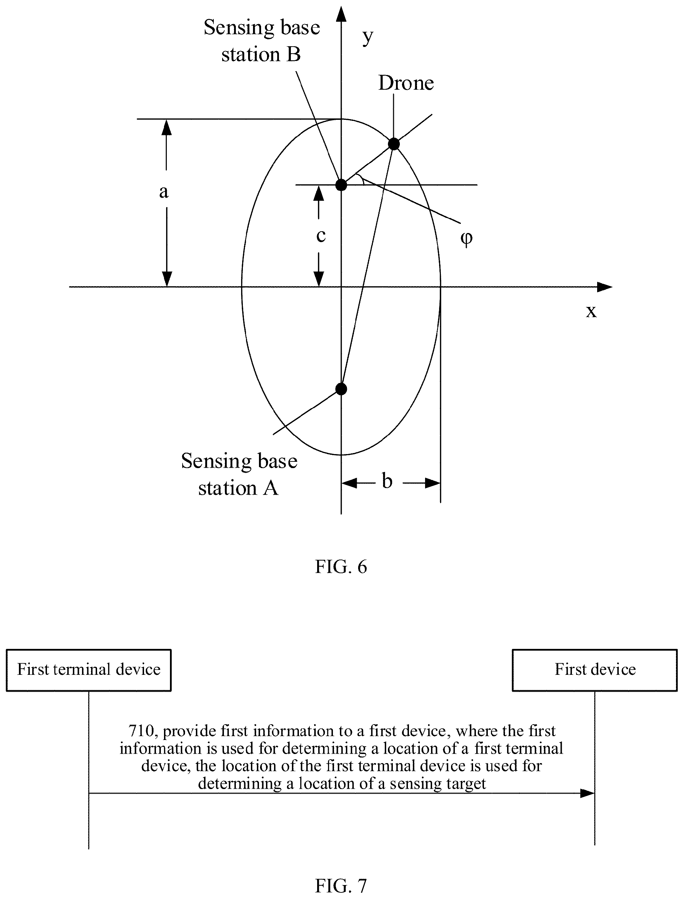

FIG. 6 shows a method for determining a location of a sensing target provided in the related art. Considering an example in which a drone is a sensing target, in a two-dimensional (2D) ellipse method, coordinates of the drone is assumed to be (x, y), and a corresponding formula for an ellipse is:

$$\frac{y^2}{a^2} + \frac{x^2}{b^2} = 1$$

where $b^2 + c^2 = a^2$, and $\varphi$ is an angle sensed by a sensing base station:

$$y = tan\varphi \cdot x + c$$

from the above formulas, it can be concluded that:

$$(a^2 + b^2 \cdot tan^2\varphi)x^2 + 2 \cdot b^2 \cdot c \cdot tan\varphi \cdot x - b^4 = 0$$

that is, a coordinate location of the drone is calculated.

For a sensing mode that A transmits and B receives (e.g., inter-base station sensing, air interface uplink sensing, air interface downlink sensing, and inter-terminal sensing), a sensing signal transmitted by sensing node A is reflected by a sensing target and received by sensing node B. A transmission delay of sensing node A-sensing target-sensing node B determines that the sensing target is located on an ellipse with sensing transmit node A and sensing receive node B as two foci. A corresponding length of the transmission delay is 2a (a major axis of the ellipse), as shown in FIG. 6.

The self-transmitting and self-receiving sensing mode (base station echo sensing and terminal echo sensing) is a special case of FIG. 6, where sensing node A and sensing node B coincide with each other, and the transmission delay determines that the sensing target is located on a perfect circle with sensing node A (or sensing node B) as a center.

It can be seen that, regardless of the self-transmitting and self-receiving mode or the mode that A transmits and B receives, to determine the location of the sensing target, location information of the sensing receive node and the sensing transmit node needs to be known during the sensing result calculation. In a case where the sensing node is a gNB, the network knows the location information of the sensing node. However, in a case where the sensing node is a UE, it cannot be assumed that the network always knows the location information of the UE. When the network does not know the location of the UE, the location of the sensing target cannot be determined based on the location of the sensing node. Therefore, the sensing information of the sensing target cannot be acquired.

Referring to FIG. 7, FIG. 7 shows a flowchart of an information providing method provided in an embodiment of the present disclosure. The method may be applied to the network architecture shown in FIG. 1. The method may include the following step 710.

In step 710, a first terminal device provides first information to a first device, where the first information is used for determining a location of the first terminal device, and the location of the first terminal device is used for determining a location of a sensing target.

Correspondingly, the first device receives the first information provided by the first terminal device.

The first terminal device is configured to: transmit a sensing signal to the sensing target, and/or receive an echo signal from the sensing target.

The first information is used for determining the location of the first terminal device. In some embodiments, the first information may be used for directly indicating the location of the first terminal device; alternatively, the first information may refer to other information used for determining the location of the first terminal device, such as a reference signal transmitted by the first terminal device, where the reference signal may be used for determining the location of the first terminal device, such as a positioning reference signal.

In some embodiments, the first terminal device refers to a terminal device for determining the location of the sensing target.

In some embodiments, the first terminal device may be a sensing transmit terminal device for transmitting the sensing signal to the sensing target, or may be a sensing receive terminal device for receiving the echo signal from the sensing target in response to the sensing signal.

In some embodiments, the first device is configured to determine the location of the sensing target based on the location of the first terminal device. The first device may be an SF or a sensing server terminal device (SS UE), which is not limited in the present disclosure.

In some embodiments, the location of the first terminal device includes the following two types: an absolute location of the first terminal device; and a relative location between the first terminal device and a reference device or a reference location.

The present disclosure does not limit the reference device or the reference location. The reference device or the reference location may be configured by a network, or may be determined based on a self implementation of the first terminal device, which is not limited in the present disclosure.

For example, the reference device may be the first device, or may be a second device. Of course, the reference device may also be another device with known location, which is not limited in the present disclosure. The reference location may be any location configured by the network, which is not limited in the present disclosure.

The second device refers to a peer end device of the first terminal device, and is configured to determine the location of the sensing target.

In some embodiments, the first terminal device is configured to transmit the sensing signal to the sensing target, and the second device is configured to receive the echo signal from the sensing target in response to the sensing signal.

In some embodiments, the second device is configured to transmit the sensing signal to the sensing target, and the first terminal device is configured to receive the echo signal from the sensing target in response to the sensing signal.

The second device may be a terminal device or a network device, which is not limited in the present disclosure.

For example, the first terminal device is a sensing transmit terminal device, and the second device may be a sensing receive terminal device, or may be a sensing receive network device, such as a sensing receive base station.

For example, the first terminal device is a sensing receive terminal device, and the second device may be a sensing transmit terminal device, or may be a sensing transmit network device, such as a sensing transmit base station.

The sensing receive device (including the sensing receive terminal device and the sensing receive network device) is configured to receive the echo signal from the sensing target in response to the sensing signal. The sensing transmit device (including the sensing transmit terminal device and the sensing transmit network device) is configured to transmit the sensing signal to the sensing target.

In some embodiments, the first terminal device may determine the location of the first terminal device based on a global navigation satellite system (GNSS) of the first terminal device.

In some embodiments, the first terminal device may determine the location of the first terminal device based on an NR positioning process. Of course, the first terminal device may also use other positioning methods to determine the location of the first terminal device, which is not limited in the present disclosure.

In some embodiments, the first information may be updated, and an updating mechanism of the first information may include the following content.

In some embodiments, the first information has corresponding validity time. The validity time means that the location of the first terminal device included in the first information is only valid within the validity time.

In some embodiments, the validity time may be an expiration moment of the first information, or a validity duration of the first information, which is not limited in the present disclosure.

In some embodiments, the first device may determine whether to further request an update of the first information based on the validity time of the first information.

In some embodiments, the first information is configured to be updated in a case where a change in the location of the first terminal device satisfies a condition.

In some embodiments, the description that the change in the location of the first terminal device satisfies the condition means that the change in the location of the first terminal device exceeds a threshold value. The threshold value may be configured by the first device.

In some embodiments, in a case where the change in the location of the first terminal device satisfies the condition, the first terminal device provides first information (2) to the first device, where the first information (2) may be used to indicate an offset of a current location of the first terminal device relative to a location of the first terminal device included in first information (1). The first information (1) refers to first information updated by the first information (2), that is, the latest first information provided before the change in the location of the first terminal device satisfies the condition.

In some embodiments, the first information is configured to be reported periodically.

In some embodiments, a reporting period of the first information may be configured by the network, or may be based on the self implementation of the first terminal device, or may be predefined, which is not limited in the present disclosure.

In some embodiments, the update mechanism of the first terminal device may be configured by the network or by the first device, which is not limited in the present disclosure.

In the technical solution provided in the present disclosure, in a case where a terminal device exists in the sensing receive device and the sensing transmit device, the terminal device provides the location of the terminal device to the first device, so that the first device may determine locations of the sensing receive device and the sensing transmit device. Then, the first device may determine the location of the sensing target based on the locations of the sensing receive device and the sensing transmitting device. Furthermore, the sensing information of the sensing target may be acquired based on the location of the sensing target, thereby improving reliability and success rate of acquiring the sensing information of the sensing target.

In some embodiments, the first terminal device provides the first information to the first device after receiving a request message for requesting the location of the first terminal device.

In some embodiments, the first device may directly request the location of the first terminal device from the first terminal device, or may indirectly request the location of the first terminal device via a third device.

In some embodiments, the first device directly transmits the request message to the first terminal device, to request the location of the first terminal device.

In some embodiments, before step 710, the method further includes step 702.

In step 702, the first device transmits a first request message to the first terminal device, where the first request message is used for requesting the first terminal device to provide the location of the first terminal device.

Correspondingly, the first terminal device receives the first request message transmitted by the first device.

In some embodiments, the first request message includes at least one of:

first indication information for indicating that the first terminal device provides the location of the first terminal device;
second indication information for indicating a type of the location of the first terminal device; or
third indication information for indicating an update mechanism of the location of the first terminal device.

The type of the location of the first terminal device includes at least one of: an absolute location of the first terminal device; or a relative location between the first terminal device and a reference device or a reference location.

In some embodiments, in a case where the second indication information is used for indicating that the type of the location of the first terminal device is the relative location between the first terminal device and the reference device or the reference location, the second indication information may further include information of the reference device or the reference location.

In some embodiments, in a case where the second indication information is used for indicating that the type of the location of the first terminal device is the relative location between the first terminal device and the reference device or the reference location, the second indication information may include information of the reference device or the reference location, to implicitly indicate that the type of the location of the first terminal device is the relative location between the first terminal device and the reference device or the reference location.

The update mechanism of the location of the first terminal device includes at least one of:

that the first information has corresponding validity time;
that the first information is configured to be updated in a case where the change in the location of the first terminal device satisfies the condition; or
that the first information is configured to be reported periodically.

In some embodiments, when the third indication information is used for indicating that the update mechanism of the location of the first terminal device is that the first information is configured to be updated in a case where the change in the location of the first terminal device satisfies the condition, the third indication information may further include a change condition for the location of the first terminal device, such as a threshold value for the change in the location of the first terminal device.

In some embodiments, when the third indication information is used for indicating that the update mechanism of the location of the first terminal device is that the first information is configured to be updated in a case where the change in the location of the first terminal device satisfies the condition, the third indication information may include a change condition of the location of the first terminal device, to implicitly indicate that the update mechanism of the location of the first terminal device is that the first information is configured to be updated in a case where the change in the location of the first terminal device satisfies the condition.

In some embodiments, when the third indication information is used for indicating that the update mechanism of the location of the first terminal device is that the first information is configured to be reported periodically, the third indication information may further include the reporting period of the first information.

In some embodiments, when the third indication information is used for indicating that the update mechanism of the location of the first terminal device is that the first information is configured to be reported periodically, the third indication information may include the reporting period of the first information, to implicitly indicate that the update mechanism of the location of the first terminal device is that the first information is configured to be reported periodically.

In some embodiments, the above-mentioned method of the first device directly requesting the location of the first terminal device from the first terminal device may be applied to a case where the first terminal device is a sensing receive device, or may be applied to a case where the first terminal device is a sensing transmit device, which is not limited in the present disclosure.

Through the above method, the first device directly requests the location of the first terminal device from the first terminal device, and then determines the location of the sensing target based on the location of the first terminal device. Furthermore, the sensing information of the sensing target may be acquired based on the location of the sensing target, thereby improving the reliability and success rate of acquiring the sensing information of the sensing target.

In some embodiments, the first device may indirectly request the location of the first terminal device from the first terminal device via the third device.

In some embodiments, before step 710, the method further includes steps 704 and 706.

In step 704, the first device transmits a third request message to the third device, where the third request message is used for requesting the third device to indirectly provide the location of the first terminal device to the first device.

Correspondingly, the third device receives the third request message transmitted by the first device.

In step 706, the third device transmits a second request message to the first terminal device, where the second request message is used for requesting the location of the first terminal device, and the location of the first terminal device is indirectly provided to the first device by the third device.

Correspondingly, the first terminal device receives the second request message transmitted by the third device.

In some embodiments, the second request message is transmitted by the third device after the third device receives the third request message from the first device, and the third request message is used for requesting the third device to indirectly provide the location of the first terminal device to the first device.

In some embodiments, the third device is a first network device.

The first network device may be configured to acquire the location of the first terminal device. For example, the first network device may be a core network element configured to acquire the location of the first terminal device. For another example, the first network device may be another network device capable of acquiring the location of the first terminal device. For example, the first network device may determine the location of the first terminal device based on a positioning reference signal.

In some embodiments, in a case where the first network device is the core network element configured to acquire the location of the first terminal device, the first network device is any one of: an AMF, an LMF, or a gateway mobile location centre (GMLC).

In some embodiments, the third device is a second device. The second device refers to a peer end device of the first terminal device, and is configured to determine the location of the sensing target.

In some embodiments, the second device may be a terminal device or a network device. For example, the second device may be a terminal device or a base station.

In the case where the second device is a terminal device, the first terminal device and the second device perform the inter-terminal sensing (UE-UE sensing).

In the case where the second device is a network device, if the first terminal device is a sensing transmit device, the first terminal device and the second device perform the air interface uplink sensing (UE-gNB uplink sensing).

In the case where the second device is a network device, if the first terminal device is a sensing receive device, the first terminal device and the second device perform the air interface downlink sensing (UE-gNB downlink sensing).

In some embodiments, the third request message includes at least one of:

identification information of the first terminal device;
second indication information for indicating a type of the location of the first terminal device; or
third indication information for indicating an update mechanism of the location of the first terminal device.

The identification information of the first terminal device refers to information that can uniquely identify the first terminal device, such as an identifier (ID) of the first terminal device.

In some embodiments, in the case where the third device is the second device and the second device is a terminal device, the third request message may further include fourth indication information for indicating the second device to provide a location of the second device.

In some embodiments, the second request message includes at least one of:

first indication information for indicating that the first terminal device provides the location of the first terminal device;

second indication information for indicating a type of the location of the first terminal device; or

third indication information for indicating an update mechanism of the location of the first terminal device.

The various indication information included in the third request message and the second request message is the same as the indication information included in the first request message, which will not be repeated here.

In some embodiments, the above-mentioned method of the first device indirectly acquiring the location of the first terminal device may be applied a case where the first terminal device is a sensing receive device, or may be applied to a case where the first terminal device is a sensing transmit device, which is not limited in the present disclosure.

Through the above method, the first device may indirectly acquire the location of the first terminal device, and then determine the location of the sensing target. Furthermore, the sensing information of the sensing target may be acquired based on the location of the sensing target, thereby improving the reliability and success rate of acquiring the sensing information of the sensing target.

In some embodiments, the first device may also indirectly acquire a location of a second terminal device via the first terminal device. The second terminal device refers to a peer end device of the first terminal device, and is configured to transmit an echo signal to the sensing target or receive an echo signal from the sensing target.

In some embodiments, the method further includes step 708.

In step 708, the first terminal device transmits a fourth request message to the second terminal device, where the fourth request message is used for requesting the second terminal device to provide second information.

Correspondingly, the second terminal device receives the fourth request message transmitted by the first terminal device.

Correspondingly, the first terminal device receives the second information transmitted by the second terminal device.

In some embodiments, the second information is used for determining the location of the second terminal device.

In some embodiments, the second information may be the location of the second terminal device, or may be information for determining the location of the second terminal device, such as a reference signal transmitted by the second terminal device, e.g., positioning reference information transmitted by the second terminal device.

In some embodiments, the fourth request message may include at least one of:

fifth indication information for indicating that the second terminal device provides the location of the first terminal device;

sixth indication information for indicating a type of the location of the second terminal device; or

seventh indication information for indicating an update mechanism of the location of the second terminal device.

As for the fifth, sixth and seventh indication information, reference may be made to the first, second and third indication information in the above embodiments, which will not be repeated here.

The type of the location of the second terminal device indicated by the sixth indication information may be the same as or different from the type of the location of the first terminal device indicated by the second indication information, which is not limited in the present disclosure.

For example, the type of the location of the second terminal device indicated by the sixth indication information and the type of the location of the first terminal device indicated by the second indication information may both be absolute locations.

For example, the type of the location of the second terminal device indicated by the sixth indication information and the type of the location of the first terminal device indicated by the second indication information may both be relative locations with respect to a reference device or a reference location.

For another example, the type of location of the first terminal device indicated by the second indication information is an absolute location of the first terminal device, and the type of location of the second terminal device indicated by the sixth indication information is a relative location with respect to a reference device or a reference location. For example, the reference device is the first terminal device, and the type of location of the second terminal device indicated by the sixth indication information is the relative location between the second terminal device and the first terminal device.

In some embodiments, the information included in the fourth request message is determined by the first terminal device based on the self implementation of the first terminal device, or may be configured for the first terminal device by the network, which is not limited in the present disclosure.

In some embodiments, the fourth request message and the second information may be carried by sidelink RRC signaling between the first terminal device and the second terminal device, or may be carried by sidelink NAS signaling between the first terminal device and the second terminal device, which is not limited in the present disclosure.

Through the above method, in the UE-UE sensing scenario, the first device may also acquire locations of the first terminal device and the second terminal device, and then determine the location of the sensing target. Furthermore, the sensing information of the sensing target may be acquired based on the location of the sensing target, thereby improving the reliability and success rate of acquiring the sensing information of the sensing target.

In some embodiments, the first information and the first request message may be transmitted separately, or may be carried in other messages, which is not limited in the present disclosure.

In some embodiments, in the case where the first terminal device is configured to receive the echo signal from the sensing target, the first information is carried in sensing measurement information, and the sensing measurement information includes a measurement result of the first terminal device for the echo signal.

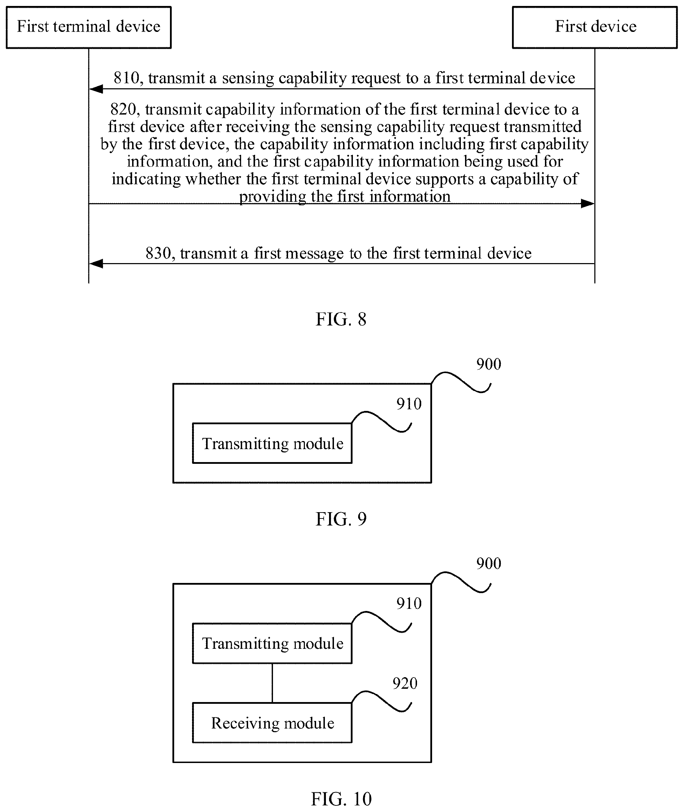

In some embodiments, as shown in FIG. 8, the method is further implemented as at least one of the following steps 810 to 830.

In step 810, the first device transmits a sensing capability request to the first terminal device.

In step 820, the first terminal device transmits capability information of the first terminal device to the first device after receiving the sensing capability request transmitted by the first device. The capability information includes first capability information, and the first capability information is used for indicating whether the first terminal device supports a capability of providing the first information.

In step 830, the first device transmits a first message to the first terminal device.

Correspondingly, the first terminal device receives the first message transmitted by the first device.

The first message includes at least one of:

    sensing signal configuration information;
    sensing measurement configuration information;
    sensing reporting configuration information;
    first indication information for indicating that the first terminal device provides the location of the first terminal device;
    second indication information for indicating the type of the location of the first terminal device;
    third indication information for indicating the update mechanism of the location of the first terminal device; or
    fourth indication information for indicating whether to simultaneously request the location of the second terminal device, the second terminal device being configured to transmit the sensing signal to the sensing target.

In some embodiments, the sensing signal configuration information is used for configuring a sensing signal, and the sensing signal is used for sensing the sensing target. The sensing measurement configuration information is used for configuring at least one of: a measurement quantity or a measurement period. The sensing reporting configuration information is used for configuring at least one of: event triggering or periodic reporting.

In some embodiments, the first message may be transmitted via radio resource control (RRC) signaling or NAS signaling, which is not limited in the present disclosure.

In some embodiments, the contents included in the first message may be carried by one message, or may be respectively carried by multiple messages, which is not limited in the present disclosure. For example, the sensing signal configuration information, the sensing measurement configuration information, and the sensing reporting configuration information may be carried by one message, or may be respectively carried by three messages, or may be carried by two messages. Specifically, the present disclosure does not limit what information is carried in each message.

In some embodiments, the sensing measurement information further carries second information, where the second information is used for determining the location of the second terminal device, and the second terminal device is configured to transmit the sensing signal to the sensing target.

For example, in the case where the first message includes the fourth indication information and the fourth indication information is used for indicating that the location of the second terminal device is simultaneously requested, the sensing measurement information carries the second information.

Through the above method, the location of the first terminal device may be carried in a message required for the sensing process and transmitted without designing a new message, thereby reducing information interaction required for the sensing process.

Regarding the methods provided in the embodiments of the present disclosure, some exemplary embodiments are provided in the present disclosure.

Considering an example in which the first device indirectly requests the location of the first terminal device (e.g., a sensing receive terminal device) via the second device, a specific implementation process of this embodiment is as follows.

    1. An SF initiates, based on a sensing request, a sensing session between the sensing receive terminal device and the SF.

    2. The sensing receive terminal device reports first capability information to the SF based on a sensing capability request of the SF, and the first capability information includes whether the sensing receive terminal device supports providing first information.

3. The sensing receive terminal device receives a first message transmitted by the SF, the first message includes at least one of: sensing reference signal configuration information, sensing measurement configuration information (measurement quantity and measurement period), or sensing reporting configuration information (event triggering and periodic reporting), and the first message may be transmitted via RRC/NAS dedicated signaling.

    a. The first message indicates requesting the sensing receive terminal device to provide indication information of the location of the first terminal device, and/or the type of the location of the first terminal device.
    b. The first message may further indicate whether to simultaneously request a location of a sensing transmit terminal device (the second terminal device) and a type corresponding to the location.

4. The sensing receive terminal device acquires the location of the sensing receive terminal device based on the indication information in the first message.

    a. Specifically, the sensing receive terminal may acquire location information via its own GNSS or triggering an NR positioning process.
    b. In a case where the first message indicates that the location of the sensing transmit terminal device needs to be provided, similarly:

        i. the sensing receive terminal device transmits a fourth request message to the sensing transmit terminal device, and the fourth request message indicates requesting the sensing transmit terminal device to provide indication information of the location of the sensing transmit terminal device, and/or a type of the location of the sensing transmit terminal device;
        ii. the sensing transmit terminal device acquires the location based on the fourth request message; specifically, the sensing transmit terminal device may acquire location information via its own GNSS or triggering an NR positioning process;
        iii. the sensing receive terminal device receives second information from the sensing transmit terminal device, where the second information is used for determining the location of the sensing transmit terminal device; and
        iv. the fourth request message and the second information may be transmitted via RRC/NAS dedicated signaling on a sidelink established between the sensing transmit terminal device and the sensing receive terminal device.

5. The sensing receive terminal device performs sensing reference signal measurement based on the above-mentioned sensing measurement configuration information, and calculates corresponding sensing information.
6. The sensing receive terminal device reports, based on the sensing reporting configuration information, the sensing information to the SF, as well as the location of the sensing receive terminal device and/or the location of the sensing transmit terminal device.
7. The SF calculates a sensing result based on the sensing information reported by the sensing receive terminal device as well as the location of the sensing receive terminal and/or the location of the sensing transmit terminal.

Considering an example in which the first device directly requests the location of the first terminal device from the first terminal device (a sensing transmit terminal device), a specific implementation process of this embodiment is as follows.

    1. An SF initiates, based on a sensing request, a sensing session between the sensing transmit terminal device and the SF.
    2. The sensing transmit terminal device reports first capability information to the SF based on a sensing capability request of the SF, and the first capability information includes whether the sensing transmit terminal device supports providing first information.
    3. The sensing transmit terminal device receives a first request message transmitted by the SF, and the first request message may be transmitted via RRC/NAS dedicated signaling.

        a. The first request message indicates requesting the sensing transmit terminal device to provide indication information of a location, and/or a type of the location of the sensing transmit terminal device.
        b. The first request message may further indicate an update mechanism of the location of the sensing transmit terminal device, for example:

            i. request-based reporting: when the first information is reported, validity time of the first information is provided at the same time, and the SF decides whether to further request an update of the first information;

ii. event-triggered reporting: the SF configures a location change threshold as an event, and when the event occurs, the terminal triggers reporting of new first information or an offset relative to a previous reported location; and

iii. periodic reporting: the SF is configured to periodically report the first information.

4. The sensing transmit terminal device acquires the location based on indication information provided by the first information.

a. Specifically, the sensing transmit terminal device may acquire location information via its own GNSS or triggering an NR positioning process.

5. The sensing transmit terminal device reports a corresponding location of the sensing transmit terminal device to the SF based on the first request message and the above-mentioned update mechanism.

Considering an example in which the first device indirectly requests the location of the first terminal device from the first network device (GMLC/AMF/LMF), a specific implementation process of this embodiment is as follows.

1. An SF initiates, based on a sensing request, a sensing session between the first terminal device and the SF.

2. When the SF needs to know the location of the first terminal device, the SF transmits a third request message to a core network element (such as an LMF/AMF):

a. The third request message may carry identification information of the first terminal device and/or a type of the location of the first terminal device.

b. The first request message may further indicate an update mechanism of the location of the first terminal device, for example:

i. request-based reporting: when the first information is reported, validity time of the first information is provided at the same time, and the SF decides whether to further request an update of the first information;

ii. event-triggered reporting: the SF configures a location change threshold as an event, and when the event occurs, the terminal triggers reporting of new first information or an offset relative to a previous reported location;

iii. periodic reporting: the SF is configured to periodically report the first information.

c. Based on the existing location services service request (LCS Service Request) process, the SF, as an LCS client, requests the location of the first terminal device from a GMLC/AMF/LMF.

3. The core network element, such as GMLC/AMF/LMF, triggers a positioning process of the first terminal device based on the third request message, to acquire the location of the first terminal device.

4. The core network element, such as GMLC/AMF/LMF, transmits the location of the first terminal device to the SF.

Apparatus embodiments of the present disclosure are as follows, which may be used for performing the method embodiments of the present disclosure. As for details not described in the apparatus embodiments of the present disclosure, reference is made to the method embodiments of the present disclosure.

Referring to FIG. 9, FIG. 9 shows a block diagram of an information providing apparatus provided in an embodiment of the present disclosure. The apparatus has the function of implementing the above-mentioned examples of the information providing method, and the function may be implemented by hardware or by hardware executing corresponding software. The apparatus may be the first terminal device described above, or may be arranged in the first terminal device. As shown in FIG. 9, the apparatus 900 may include: a transmitting module 910.

The transmitting module 910 is configured to provide first information to a first device, where the first information is used for determining a location of the first terminal device, and the location of the first terminal device is used for determining a location of a sensing target.

In some embodiments, as shown in FIG. 10, the apparatus 900 further includes:
a receiving module 920 configured to receive a first request message transmitted by the first device, the first request message being used to request the location of the first terminal device.

In some embodiments, the first request message includes at least one of:

first indication information for indicating that the first terminal device provides the location of the first terminal device;

second indication information for indicating a type of the location of the first terminal device; or
third indication information for indicating an update mechanism of the location of the first terminal device.

In some embodiments, the receiving module 920 is further configured to receive a second request message transmitted by a third device, the second request message is used for requesting the location of the first terminal device, and the location of the first terminal device is indirectly provided to the first device by the third device.

In some embodiments, the third device is a second device;

the first terminal device is configured to transmit a sensing signal to the sensing target, and the second device is configured to receive an echo signal from the sensing target in response to the sensing signal;
or
the second device is configured to transmit the sensing signal to the sensing target, and the first terminal device is configured to receive the echo signal from the sensing target in response to the sensing signal.

In some embodiments, the third device is a first network device, and the first network device is any one of: an AMF, an LMF, or a GMLC.

In some embodiments, the second request message is transmitted after the third device receives a third request message from the first device, and the third request message is used for requesting the third device to indirectly provide the location of the first terminal device to the first device.

In some embodiments, the third request message includes at least one of:

identification information of the first terminal device;
second indication information for indicating a type of the location of the first terminal device; or
third indication information for indicating an update mechanism of the location of the first terminal device.

In some embodiments, the second request message includes at least one of:

first indication information for indicating that the first terminal device provides the location of the first terminal device;
second indication information for indicating a type of the location of the first terminal device; or
third indication information for indicating an update mechanism of the location of the first terminal device.

In some embodiments, in a case where the first terminal device is configured to receive the echo signal from the sensing target, the first information is carried in sensing measurement information, and the sensing measurement information includes a measurement result of the first terminal device for the echo signal.

In some embodiments, the sensing measurement information further carries second information, the second information is used for determining a location of a second terminal device, and the second terminal device is configured to transmit the sensing signal to the sensing target.

In some embodiments, the transmitting module 910 is further configured to transmit a fourth request message to the second terminal device, and the fourth request message is used for requesting the second terminal device to provide the second information.

The receiving module 920 is further configured to receive the second information transmitted by the second terminal device.

In some embodiments, the transmitting module 910 is further configured to transmit capability information of the first terminal device to the first device after receiving a sensing capability request transmitted by the first device, the capability information includes first capability information, and the first capability information is used for indicating whether the first terminal device supports a capability of providing the first information.

The receiving module 920 is further configured to receive a first message transmitted by the first device, and the first message includes at least one of:

sensing signal configuration information;
sensing measurement configuration information;
sensing reporting configuration information;
first indication information for indicating that the first terminal device provides the location of the first terminal device;
second indication information for indicating a type of the location of the first terminal device;
third indication information for indicating an update mechanism of the location of the first terminal device; or
fourth indication information for indicating whether to simultaneously request the location of the second terminal device, the second terminal device being configured to transmit the sensing signal to the sensing target.

In some embodiments, the location of the first terminal device includes the following two types:

an absolute location of the first terminal device; and
a relative location between the first terminal device and a reference device or a reference location.

In some embodiments, the first information has corresponding validity time;
or

the first information is configured to be updated in a case where a change in the location of the first terminal device satisfies a condition;
or
the first information is configured to be reported periodically.

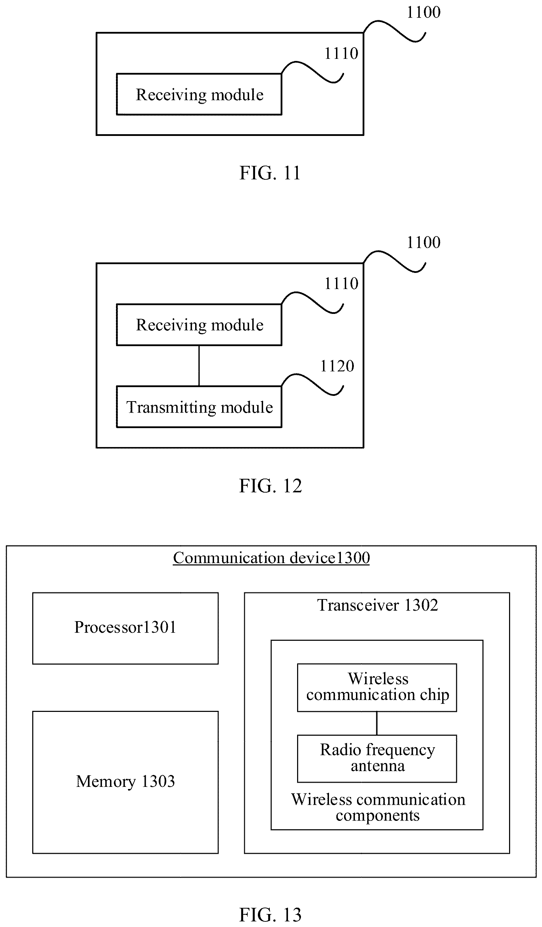

Referring to FIG. 11, FIG. 11 shows a block diagram of an information providing apparatus provided in an embodiment of the present disclosure. The apparatus has the function of implementing the above-mentioned examples of the information acquisition method, and the function may be implemented by hardware or by hardware executing corresponding software. The apparatus may be the first device described above, or may be arranged in the first device. As shown in FIG. 11, the apparatus 1100 may include: a receiving module 1110.

The receiving module 1110 is configured to receive first information provided by a first terminal device, where the first terminal device is configured to: transmit a sensing signal to a sensing target, and/or receive an echo signal from the sensing target; the first information is used for determining a location of the first terminal device; and the location of the first terminal device is used for determining a location of a sensing target.

In some embodiments, as shown in FIG. 12, the apparatus 1100 further includes:
a transmitting module 1120 configured to transmit a first request message to the first terminal device, where the first request message is used for requesting the first terminal device to provide the location of the first terminal device.

In some embodiments, the first request message includes at least one of:

first indication information for indicating that the first terminal device provides the location of the first terminal device;
second indication information for indicating a type of the location of the first terminal device; or
third indication information for indicating an update mechanism of the location of the first terminal device.

In some embodiments, the transmitting module 1120 is further configured to transmit a third request message to a third device, where the third request message is used for requesting the third device to indirectly provide the location of the first terminal device to the first device.

In some embodiments, the third device is a second device;

the first terminal device is configured to transmit the sensing signal to the sensing target, and the second device is configured to receive the echo signal from the sensing target in response to the sensing signal;
or
the second device is configured to transmit the sensing signal to the sensing target, and the first terminal device is configured to receive the echo signal from the sensing target in response to the sensing signal.

In some embodiments, the third device is a first network device, and the first network device is any one of: an access and mobility management function (AMF) network element, a location management function (LMF) network element, or a gateway mobile location centre (GMLC).

In some embodiments, the third request message includes at least one of:

identification information of the first terminal device;
second indication information for indicating a type of the location of the first terminal device; or
third indication information for indicating an update mechanism of the location of the first terminal device.

In some embodiments, in a case where the first terminal device is configured to receive the echo signal from the sensing target, the first information is carried in sensing measurement information, and the sensing measurement information includes a measurement result of the first terminal device for the echo signal.

In some embodiments, the sensing measurement information further carries second information, the second information is used for determining a location of a second terminal device, and the second terminal device is configured to transmit the sensing signal to the sensing target.

In some embodiments, the transmitting module 1120 is further configured to transmit a sensing capability request to the first terminal device.

The receiving module 1110 is further configured to receive capability information transmitted by the first terminal device, the capability information includes first capability information, and the first capability information is used for indicating whether the first terminal device supports a capability of providing the first information.

The transmitting module 1120 is further configured to transmit a first message to the first terminal device, and the first message includes at least one of:

sensing signal configuration information;
sensing measurement configuration information;
sensing reporting configuration information;
first indication information for indicating that the first terminal device provides the location of the first terminal device;
second indication information for indicating a type of the location of the first terminal device;
third indication information for indicating an update mechanism of the location of the first terminal device; or
fourth indication information for indicating whether to simultaneously request the location of the second terminal device, the second terminal device being configured to transmit the sensing signal to the sensing target.

In some embodiments, the location of the first terminal device includes the following two types:

an absolute location of the first terminal device; and
a relative location between the first terminal device and a reference device or a reference location.

In some embodiments, the first information has corresponding validity time;
or

the first information is configured to be updated in a case where a change in the location of the first terminal device satisfied a condition;
or
the first information is configured to be reported periodically.

It should be noted that, when the apparatus provided in the above embodiments implements its functions, the division of the above-mentioned functional modules is only taken as an example. In actual applications, the above-mentioned functions may be assigned to different functional modules according to actual needs, that is, the content structure of the apparatus may be divided into different functional modules to implement all or part of the functions described above.

Regarding the apparatuses in the above embodiment, the specific manners in which each module performs operations are described in detail in the embodiments of the methods, which will not be repeated here.

Referring to FIG. 13, FIG. 13 shows a schematic structural diagram of a communication device provided in an embodiment of the present disclosure. The communication device 1300 may include: a processor 1301, a transceiver 1302, and a memory 1303. The transceiver 1302 is configured to implement functions of the transmitting module 910, the receiving module 920, the receiving module 1110, and the transmitting module 1120 mentioned above.

The processor 1301 includes one or more processing cores. The processor 1301 executes various functional applications and information processing by running software programs and modules. The processor 1301 is configured to perform other steps except transmitting and receiving steps performed by the terminal device in the above method embodiments.

The transceiver 1302 may include a receiver and a transmitter. For example, the receiver and the transmitter may be implemented as the same wireless communication component, and the wireless communication component may include a wireless communication chip and radio frequency antenna(s). The transceiver 1302 is configured to perform the transmitting and/or receiving steps performed by the terminal device in the above method embodiments.

The memory 1303 may be connected to the processor 1301 and the transceiver 1302.

The memory 1303 may be configured to store a computer program executed by the processor, and the processor 1301 is configured to execute the computer program to implement each step in the above method embodiments.

In addition, the memory may be implemented by any type of volatile or non-volatile storage device or a combination of volatile and non-volatile storage devices, and the volatile or non-volatile storage device includes but is not limited to: a magnetic disk or an optical disk, an electrically erasable programmable read-only memory, an erasable programmable read-only memory, a static random access memory, a read-only memory, a magnetic memory, a flash memory, or a programmable read-only memory.

In an exemplary embodiment, in a case where the communication device is a first terminal device, the first terminal device is configured to: transmit a sensing signal to a sensing target, and/or receive an echo signal from the sensing target; the transceiver 1302 of the first terminal device is configured to provide first information to a first device, the first information is used for determining a location of the first terminal device, and the location of the first terminal device is used for determining a location of the sensing target.

In an exemplary embodiment, in a case where the communication device is a first device, the transceiver 1302 of the first device is configured to receive first information provided by a first terminal device, and the first terminal device is configured to: transmit a sensing signal to a sensing target, and/or receive an echo signal from the sensing target; the first information is used for determining a location of the first terminal device; and the location of the first terminal device is used for determining a location of the sensing target.

As for details not described in detail in the embodiments, reference can be made to the above embodiments, which will not be repeated here.

The embodiments of the present disclosure further provide a computer-readable storage medium, and the storage medium has stored a computer program. The computer program is used for being executed by a processor, to implement the above-mentioned information providing method or the above-mentioned information acquisition method. Optionally, the computer-readable storage medium may include: a read-only memory (ROM), a random-access memory (RAM), a solid state drive (SSD) or an optical disk. The random access memory may include a resistance random access memory (ReRAM) and a dynamic random access memory (DRAM).

The embodiments of the present disclosure further provide a chip, and the chip includes a programmable logic circuit and/or program instructions. When the chip is running, the chip is configured to implement the above-mentioned information providing method or the above-mentioned information acquisition method.

The embodiments of the present disclosure further provide a computer program product, the computer program product includes a computer program, and the computer program is stored in a computer-readable storage medium. A processor reads the computer program from the computer-readable storage medium and executes the computer program to implement the above-mentioned information providing method or the above-mentioned information acquisition method.

It should be understood that the term "indicate" mentioned in the embodiments of the present disclosure may mean a direct indication or an indirect indication, or may represent that there is an association relationship. For example, A indicates B, which may mean that A directly indicates B (for example, B may be obtained by A); or it may mean that A indirectly indicates B (for example, A indicates C, and B may be obtained by C); or it may mean that there is an association relationship between A and B.

In the description of the embodiments of the present disclosure, the term "correspond", "corresponding", or "correspondence" may indicate that there is a direct correspondence or indirect correspondence between two, or it may mean that there is an associated relationship between the two, or it may mean a relationship of indicating and being indicated or a relationship of configuring and being configured, or the like.

In some embodiments of the present disclosure, "predefined" or "preconfigured" may be implemented by pre-saving corresponding codes, tables or other manners that may be used to indicate related information in devices (e.g., including a terminal device and a network device), and a specific implementation manner thereof is not limited in the present disclosure. For example, the predefined may refer to being defined in a protocol.

In some embodiments of the present disclosure, the "protocol" may refer to a standard protocol in the communication field. For example, the "protocol" may include an LTE protocol, an NR protocol, and a related protocol used in a future communication system, which is not limited in present disclosure.

The term "multiple" mentioned herein may refer to two or more. The term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

The term "greater than or equal to" mentioned herein may mean greater than or equal to, or greater than; and the term "less than or equal to" may mean less than or equal to, or less than.

In addition, the serial numbers of the steps described herein only illustrate a possible execution order of the steps. In some other embodiments, the above steps may be performed without following the order of the serial numbers. For example, two steps with different serial numbers are performed simultaneously, or two steps with different serial numbers are performed in an order opposite to that shown in the figure, which will not be limited in the embodiments of the present disclosure.

Those skilled in the art will appreciate that in one or more of the above examples, the functions described in the embodiments of the present disclosure may be implemented in hardware, software, firmware or any combination of hardware, software, and firmware. When implemented in software, the functions may be stored on a computer-readable medium or transmitted as one or more instructions or codes on a computer-readable medium. The computer-readable medium includes a computer storage medium and a communication medium. The communication medium includes any medium that facilitates transfer of a computer program from one place to another. The storage medium may be any available medium that can be accessed by a general-purpose or special-purpose computer.

The foregoing descriptions are merely exemplary embodiments of the present disclosure and are not intended to limit the present disclosure. Any modifications, equivalent substitutions, improvements, etc. made within the spirit and principles of the present disclosure shall be included within the protection scope of the present disclosure.

**Claims**

1. An information providing method, wherein the method is performed by a first terminal device, and the first terminal device is configured to: transmit a sensing signal to a sensing target and/or receive an echo signal from the sensing target; and the method comprises:
   providing first information to a first device, wherein the first information is used for determining a location of the first terminal device, and the location of the first terminal device is used for determining a location of the sensing target.

2. The method according to claim 1, further comprising:
   receiving a first request message transmitted by the first device, wherein the first request message is used for requesting the location of the first terminal device.

3. The method according to claim 2, wherein the first request message comprises at least one of:

   first indication information for indicating that the first terminal device provides the location of the first terminal device;
   second indication information for indicating a type of the location of the first terminal device; or
   third indication information for indicating an update mechanism of the location of the first terminal device.

4. The method according to claim 1, further comprising:
   receiving a second request message transmitted by a third device, wherein the second request message is used for requesting the location of the first terminal device, and the location of the first terminal device is indirectly provided to the first device by the third device.

5. The method according to claim 4, wherein the third device is a second device;

   the first terminal device is configured to transmit the sensing signal to the sensing target, and the second device is configured to receive the echo signal from the sensing target in response to the sensing signal;
   or
   the second device is configured to transmit the sensing signal to the sensing target, and the first terminal device is configured to receive the echo signal from the sensing target in response to the sensing signal.

6. The method according to claim 4, wherein the third device is a first network device, and the first network device is any one of: an access and mobility management function (AMF) network element, a location management function (LMF) network element, and a gateway mobile location centre (GMLC).

7. The method according to any one of claims 4 to 6, wherein the second request message is transmitted after the third device receives a third request message from the first device, and the third request message is used for requesting the third device to indirectly provide the location of the first terminal device to the first device.

8. The method according to claim 7, wherein the third request message comprises at least one of:

   identification information of the first terminal device;
   second indication information for indicating a type of the location of the first terminal device; or
   third indication information for indicating an update mechanism of the location of the first terminal device.

9. The method according to any one of claims 4 to 8, wherein the second request message comprises at least one of:

   first indication information for indicating that the first terminal device provides the location of the first terminal device;
   second indication information for indicating a type of the location of the first terminal device; or
   third indication information for indicating an update mechanism of the location of the first terminal device.

10. The method according to claim 1, wherein in a case where the first terminal device is configured to receive the echo signal from the sensing target, the first information is carried in sensing measurement information, and the sensing measurement information comprises a measurement result of the first terminal device for the echo signal.

11. The method according to claim 10, wherein the sensing measurement information further carries second information, the second information is used for determining a location of a second terminal device, and the second terminal device is configured to transmit the sensing signal to the sensing target.

12. The method according to claim 11, further comprising:

transmitting a fourth request message to the second terminal device, wherein the fourth request message is used for requesting the second terminal device to provide the second information; and
receiving the second information transmitted by the second terminal device.

13. The method according to any one of claims 10 to 12, further comprising:

transmitting capability information of the first terminal device to the first device after receiving a sensing capability request transmitted by the first device, wherein the capability information comprises first capability information, and the first capability information is used for indicating whether the first terminal device supports a capability of providing the first information; and
receiving a first message transmitted by the first device, wherein the first message comprises at least one of:

sensing signal configuration information;
sensing measurement configuration information;
sensing reporting configuration information;
first indication information for indicating that the first terminal device provides the location of the first terminal device;
second indication information for indicating a type of the location of the first terminal device;
third indication information for indicating an update mechanism of the location of the first terminal device; or
fourth indication information for indicating whether to simultaneously request a location of a second terminal device, the second terminal device being configured to transmit the sensing signal to the sensing target.

14. The method according to any one of claims 1 to 13, wherein the location of the first terminal device includes the following two types:

an absolute location of the first terminal device; and
a relative location between the first terminal device and a reference device or a reference location.

15. The method according to any one of claims 1 to 14, wherein

the first information has corresponding validity time;
or
the first information is configured to be updated in a case where a change in the location of the first terminal device satisfies a condition;
or
the first information is configured to be reported periodically.

16. An information acquisition method, wherein the method is performed by a first device, and the method comprises:
receiving first information provided by a first terminal device, wherein the first terminal device is configured to: transmit a sensing signal to a sensing target and/or receive an echo signal from the sensing target; the first information is used for determining a location of the first terminal device, and the location of the first terminal device is used for determining a location of the sensing target.

17. The method according to claim 16, further comprising:
transmitting a first request message to the first terminal device, wherein the first request message is used for requesting the first terminal device to provide the location of the first terminal device.

18. The method according to claim 17, wherein the first request message comprises at least one of:

first indication information for indicating the first terminal device to provide the location of the first terminal device;
second indication information for indicating a type of the location of the first terminal device;
third indication information for indicating an update mechanism of the location of the first terminal device.

19. The method according to claim 16, further comprising:
transmitting a third request message to a third device, wherein the third request message is used for requesting the third device to indirectly provide the location of the first terminal device to the first device.

20. The method according to claim 19, wherein the third device is a second device;

the first terminal device is configured to transmit the sensing signal to the sensing target, and the second device is configured to receive the echo signal from the sensing target in response to the sensing signal;
or
the second device is configured to transmit the sensing signal to the sensing target, and the first terminal device is configured to receive the echo signal from the sensing target in response to the sensing signal.

21. The method according to claim 19, wherein the third device is a first network device, and the first network device is any one of: an access and mobility management function (AMF) network element, a location management function (LMF) network element, or a gateway mobile location centre (GMLC).

22. The method according to any one of claims 19 to 21, wherein the third request message comprises at least one of:

identification information of the first terminal device;
second indication information for indicating a type of the location of the first terminal device; or
third indication information for indicating an update mechanism of the location of the first terminal device.

23. The method according to claim 16, wherein in a case where the first terminal device is configured to receive the echo signal from the sensing target, the first information is carried in sensing measurement information, and the sensing measurement information comprises a measurement result of the first terminal device for the echo signal.

24. The method according to claim 23, wherein the sensing measurement information further carries second information, and the second information is used for determining a location of a second terminal device, and the second terminal device is configured to transmit the sensing signal to the sensing target.

25. The method according to claim 23 or 24, further comprising:

transmitting a sensing capability request to the first terminal device;
receiving capability information transmitted by the first terminal device, wherein the capability information comprises first capability information, the first capability information is used for indicating whether the first terminal device supports a capability of providing the first information; and
transmitting a first message to the first terminal device, wherein the first message comprises at least one of:

sensing signal configuration information;
sensing measurement configuration information;
sensing reporting configuration information;
first indication information for indicating that the first terminal device provides the location of the first terminal device;
second indication information for indicating a type of the location of the first terminal device;
third indication information for indicating an update mechanism of the location of the first terminal device; or
fourth indication information for indicating whether to simultaneously request a location of a second terminal device, the second terminal device being configured to transmit the sensing signal to the sensing target.

26. The method according to any one of claims 16 to 25, wherein the location of the first terminal device comprises the following two types:

an absolute location of the first terminal device; and
a relative location between the first terminal device and a reference device or a reference location.

27. The method according to any one of claims 16 to 26, wherein

the first information has corresponding validity time;
or
the first information is configured to be updated in a case where a change in the location of the first terminal device satisfies a condition;
or
the first information is configured to be reported periodically.

28. An information providing apparatus, the apparatus comprising:
a transmitting module, configured to provide first information to a first device, wherein the first information is used for determining a location of the first terminal device, and the location of the first terminal device is used for determining a location of the sensing target.

29. The apparatus according to claim 28, further comprising:
a receiving module, configured to receive a first request message transmitted by the first device, wherein the first request message is used for requesting the location of the first terminal device.

30. The apparatus according to claim 29, wherein the first request message comprises at least one of:

first indication information for indicating that the first terminal device provides the location of the first terminal device;
second indication information for indicating a type of the location of the first terminal device; or
third indication information for indicating an update mechanism of the location of the first terminal device.

31. The apparatus according to claim 28, wherein a receiving module is further configured to receive a second request message transmitted by a third device, the second request message is used for requesting the location of the first terminal device, and the location of the first terminal device is indirectly provided to the first device by the third device.

32. The apparatus according to claim 31, wherein the third device is a second device;

the first terminal device is configured to transmit a sensing signal to the sensing target, and the second device is configured to receive an echo signal from the sensing target in response to the sensing signal;
or
the second device is configured to transmit the sensing signal to the sensing target, and the first terminal device is configured to receive the echo signal from the sensing target in response to the sensing signal.

33. The apparatus according to claim 31, wherein the third device is a first network device, and the first network device is any one of: an access and mobility management function (AMF) network element, a location management function (LMF) network element, or a gateway mobile location centre (GMLC).

34. The apparatus according to any one of claims 31 to 33, wherein the second request message is transmitted after the third device receives a third request message from the first device, and the third request message is used for requesting the third device to indirectly provide the location of the first terminal device to the first device.

35. The apparatus according to claim 34, wherein the third request message comprises at least one of:

identification information of the first terminal device;
second indication information for indicating a type of the location of the first terminal device; or
third indication information for indicating an update mechanism of the location of the first terminal device.

36. The apparatus according to any one of claims 31 to 35, wherein the second request message comprises at least one of:

first indication information for indicating that the first terminal device provides the location of the first terminal device;
second indication information for indicating a type of the location of the first terminal device; or
third indication information for indicating an update mechanism of the location of the first terminal device.

37. The apparatus according to claim 28, wherein in a case where the first terminal device is configured to receive an echo signal from the sensing target, the first information is carried in sensing measurement information, and the sensing measurement information comprises a measurement result of the first terminal device for the echo signal.

38. The apparatus according to claim 37, wherein the sensing measurement information further carries second information, and the second information is used for determining a location of a second terminal device, and the second terminal device is configured to transmit a sensing signal to the sensing target.

39. The apparatus according to claim 38, wherein the transmitting module is further configured to transmit a fourth request message to the second terminal device, and the fourth request message is used for requesting the second terminal device to provide the second information; and
a receiving module is further configured to receive the second information transmitted by the second terminal device.

40. The apparatus according to any one of claims 37 to 39, wherein the transmitting module is further configured to transmit capability information of the first terminal device to the first device after receiving a sensing capability request transmitted by the first device, the capability information comprises first capability information, and the first capability information is used for indicating whether the first terminal device supports a capability of providing the first information; and
a receiving module is further configured to receive a first message transmitted by the first device, and the first message comprises at least one of:

sensing signal configuration information of;
sensing measurement configuration information;
sensing reporting configuration information;
first indication information for indicating that the first terminal device provides the location of the first terminal device;
second indication information for indicating a type of the location of the first terminal device;
third indication information for indicating an update mechanism of the location of the first terminal device; or
fourth indication information for indicating whether to simultaneously request a location of a second terminal device, the second terminal device being configured to transmit a sensing signal to the sensing target.

41. The apparatus according to any one of claims 28 to 40, wherein the location of the first terminal device comprises the following two types:

an absolute location of the first terminal device; and
a relative location between the first terminal device and a reference device or a reference location.

42. The apparatus according to any one of claims 28 to 41, wherein

the first information has corresponding validity time;
or
the first information is configured to be updated in a case where a change in the location of the first terminal device satisfies a condition;
or
the first information is configured to be reported periodically.

43. An information acquisition apparatus, the apparatus comprising:
a receiving module, configured to receive first information provided by a first terminal device, wherein the first terminal device is configured to: transmit a sensing signal to a sensing target and/or receive an echo signal from the sensing target; the first information is used for determining a location of the first terminal device; and the location of the first terminal device is used for determining a location of the sensing target.

44. The apparatus according to claim 43, further comprising:
a transmitting module, configured to transmit a first request message to the first terminal device, wherein the first request message is used for requesting the first terminal device to provide the location of the first terminal device.

45. The apparatus according to claim 44, wherein the first request message comprises at least one of:

first indication information for indicating that the first terminal device provides the location of the first terminal device;
second indication information for indicating a type of the location of the first terminal device; or
third indication information for indicating an update mechanism of the location of the first terminal device.

46. The apparatus according to claim 43, wherein a transmitting module is further configured to transmit a third request message to a third device, and the third request message is used for requesting the third device to indirectly provide the location of the first terminal device to the first device.

47. The apparatus according to claim 46, wherein the third device is a second device;

the first terminal device is configured to transmit the sensing signal to the sensing target, and the second device is configured to receive the echo signal from the sensing target in response to the sensing signal;
or
the second device is configured to transmit the sensing signal to the sensing target, and the first terminal device is configured to receive the echo signal from the sensing target in response to the sensing signal.

48. The apparatus according to claim 46, wherein the third device is a first network device, and the first network device is any one of: an access and mobility management function (AMF) network element, a location management function (LMF) network element, or a gateway mobile location centre (GMLC).

49. The apparatus according to any one of claims 46 to 48, wherein the third request message comprises at least one of:

identification information of the first terminal device;
second indication information for indicating a type of the location of the first terminal device; or
third indication information for indicating an update mechanism of the location of the first terminal device.

50. The apparatus according to claim 43, wherein in a case where the first terminal device is configured to receive the echo signal from the sensing target, the first information is carried in sensing measurement information, and the sensing measurement information comprises a measurement result of the first terminal device for the echo signal.

51. The apparatus according to claim 50, wherein the sensing measurement information further carries second information, and the second information is used for determining a location of a second terminal device, and the second terminal device is configured to transmit the sensing signal to the sensing target.

52. The apparatus according to claim 50 or 51, wherein

a transmitting module is further configured to transmit a sensing capability request to the first terminal device;
the receiving module is further configured to receive capability information transmitted by the first terminal device, the capability information comprises first capability information, and the first capability information is used for indicating whether the first terminal device supports a capability of providing the first information;
the transmitting module is further configured to transmit a first message to the first terminal device, and the first message comprises at least one of:

sensing signal configuration information;
sensing measurement configuration information;
sensing reporting configuration information;
first indication information for indicating that the first terminal device provides the location of the first terminal device;
second indication information for indicating a type of the location of the first terminal device;
third indication information for indicating an update mechanism of the location of the first terminal device; or
fourth indication information for indicating whether to simultaneously request a location of a second terminal device, the second terminal device being configured to transmit the sensing signal to the sensing target.

53. The apparatus according to any one of claims 43 to 52, wherein the location of the first terminal device comprises the following two types:

an absolute location of the first terminal device; and

a relative location between the first terminal device and a reference device or a reference location.

54. The apparatus according to any one of claims 43 to 53, wherein

the first information has corresponding validity time;
or
the first information is configured to be updated in a case where a change in the location of the first terminal device satisfies a condition;
or
the first information is configured to be reported periodically.

55. A communication device, wherein the communication device comprises a processor and a memory, the memory has stored a computer program, and the processor executes the computer program to implement the method according to any one of claims 1 to 15, or to implement the method according to any one of claims 16 to 27.

56. A computer-readable storage medium, wherein the storage medium has stored a computer program, and the computer program is used for being executed by a processor to implement the method according to any one of claims 1 to 15, or to implement the method according to any one of claims 16 to 27.

57. A chip, wherein the chip comprises a programmable logic circuit and/or program instructions, and when the chip is running, the chip is configured to implement the method according to any one of claims 1 to 15, or to implement the method according to any one of claims 16 to 27.

58. A computer program product, wherein the computer program product comprises computer instructions, the computer instructions are stored in a computer-readable storage medium, and a processor reads the computer instructions from the computer-readable storage medium and executes the computer instructions to implement the method according to any one of claims 1 to 15, or to implement the method according to any one of claims 16 to 27.

FIG. 1

FIG. 2

a) Base station echo sensing

b) Inter-base station sensing

c) Air interface uplink sensing

d) Air interface downlink sensing

e) Terminal echo sensing

f) Inter-terminal sensing

FIG. 3

EP 4 712 604 A1

FIG. 4

27

```
┌─────────────────┐   ┌─────────────────┐                              ┌─────────────────┐
│     STx UE      │   │     SRx UE      │                              │ Sensing Server  │
│                 │   │                 │                              │  UE (SS UE)     │
│ Sensing transmit│   │ Sensing receive │                              │ Sensing server  │
│ terminal device │   │ terminal device │                              │ terminal device │
└─────────────────┘   └─────────────────┘                              └─────────────────┘
```

Sensing Capabilities Request
(sensing capability request)

Sensing Capabilities Report
(sensing capability report)

Sensing RS Request (sensing signal request)

STx UE determines Sensing
RS Resources (sensing
transmit terminal device
determines sensing signal
transmission resources)

Sensing RS Response (sensing signal response)

Provide Sensing Assistance Data (incl. Sensing
RS Rx config)

Sensing Information Request (incl. Sensing
measurement quantities, measurement config,
reporting config)

Sensing RS
Measurements
(sensing signal
measurement)

Sensing Information Report

FIG. 5

28

FIG. 6

FIG. 7

| First terminal device | | First device |
|---|---|---|

710, provide first information to a first device, where the first information is used for determining a location of a first terminal device, the location of the first terminal device is used for determining a location of a sensing target

First terminal device | First device

810, transmit a sensing capability request to a first terminal device

820, transmit capability information of the first terminal device to a first device after receiving the sensing capability request transmitted by the first device, the capability information including first capability information, and the first capability information being used for indicating whether the first terminal device supports a capability of providing the first information

830, transmit a first message to the first terminal device

FIG. 8

900
910
Transmitting module

FIG. 9

900
910
Transmitting module
920
Receiving module

FIG. 10

1100

1110

Receiving module

FIG. 11

1100

1110

Receiving module

1120

Transmitting module

FIG. 12

Communication device 1300

Processor1301

Transceiver 1302

Wireless communication chip

Radio frequency antenna

Wireless communication components

Memory 1303

FIG. 13

## INTERNATIONAL SEARCH REPORT

| International application No. |
|---|
| **PCT/CN2023/093886** |

### A. CLASSIFICATION OF SUBJECT MATTER

H04W64/00(2009.01)i; H04W4/02(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 感知, 感测, 位置, 定位, 目标, 终端, UE, 更新, 周期, sensing, location, position, target, updat+, period+

### C. DOCUMENTS CONSIDERED TO BE RELEVANT

| Category* | Citation of document, with indication, where appropriate, of the relevant passages | Relevant to claim No. |
|---|---|---|
| X | CN 116347326 A (VIVO COMMUNICATION TECHNOLOGY CO., LTD.) 27 June 2023 (2023-06-27) description, paragraphs [0342], [0363]-[0495] and [0553] | 1-58 |
| A | CN 115706955 A (HUAWEI TECHNOLOGIES CO., LTD.) 17 February 2023 (2023-02-17) entire document | 1-58 |
| A | CN 116193612 A (WEIWO SOFTWARE TECHNOLOGY CO., LTD.) 30 May 2023 (2023-05-30) entire document | 1-58 |
| A | WO 2023061412 A1 (HUAWEI TECHNOLOGIES CO., LTD.) 20 April 2023 (2023-04-20) entire document | 1-58 |
| A | CHINA MOBILE et al. "New SID on Integrated Sensing and Communication" *3GPP SA WG1 Meeting #97e, S1-220144,* 04 February 2022 (2022-02-04), sections 3 and 4 | 1-58 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2023** | **12 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/093886**

| Patent document cited in search report | | | Publication date (day/month/year) | Patent family member(s) | | | Publication date (day/month/year) |
|---|---|---|---|---|---|---|---|
| CN | 116347326 | A | 27 June 2023 | WO | 2023116754 | A1 | 29 June 2023 |
| CN | 115706955 | A | 17 February 2023 | WO | 2023011564 | A1 | 09 February 2023 |
| CN | 116193612 | A | 30 May 2023 | WO | 2023093644 | A1 | 01 June 2023 |
| WO | 2023061412 | A1 | 20 April 2023 | CN | 115996471 | A | 21 April 2023 |

Form PCT/ISA/210 (patent family annex) (July 2022)